Europäisches Patentamt

(19) European Patent Office

Office européen des brevets

(11) Publication number: **0 074 829**
**A2**

## (12) EUROPEAN PATENT APPLICATION

(21) Application number: 82304796.4

(22) Date of filing: 13.09.82

(51) Int. Cl.³: **G 05 B 19/44**

(30) Priority: 14.09.81 GB 8127724

(43) Date of publication of application:
23.03.83 Bulletin 83/12

(84) Designated Contracting States:
AT BE CH DE FR IT LI NL SE

(71) Applicant: UNIVERSITY OF SURREY
Guildford
Surrey GU2 5XH(GB)

(72) Inventor: Drazan, Paval Jan Vaclav
108 Broadacres
Guildford Surrey(GB)

(74) Representative: Corin, Christopher John et al,
Mathisen Macara & Co. Lyon House Lyon Road
Harrow Middx. HA1 2ET(GB)

(54) **A system for moving a member.**

(57) A system for moving a member such as a robotics arm,
includes a motor (1) for moving the member, a position
indicating encoder (5) for producing an indication related to
the position of the member, valves (7, 8) which in a first
condition enable the motor to move the member in a first
direction, in a second condition enable the motor to move
the member in the opposite direction, and in a third
condition disable the motor from moving the member, and a
computer (6) for controlling the valves in positioning the
member. The valves are effectively on/off valves.

FIG. I.

Croydon Printing Company Ltd

## A SYSTEM FOR MOVING A MEMBER

The present invention relates to a system for moving a member comprising a motor for moving the member and position indicating means for generating an indication related to the position of the member.

In our British Patent No. 1,585,658 a computer-controlled robotic arm is described, and modifications of that arm are described in our co-pending European Patent Application No.          entitled "A Robotic Arm". Three degrees of freedom are provided in such arms, namely rotation about a vertical axis and angular motions of the first and second parallelogram linkages about respective horizontal axes. Air motors for angularly moving the linkages are mounted respectively at a "shoulder" and an "elbow" of the arm and a respective brake is associated with each of the three motors. Such an arm could be used to carry out repeatedly a sequence of movements, from a start position, through one or more intermediate positions and back to the start position. To do this, a system comprising the robotic arm and a computer could be "taught" by manually taking the arm through the desired sequence of movements, a member of the computer serving to store an indication representative of each of the various positions for each degree of freedom. In operation of the system thus "taught", the arm automatically undergoes repeatedly under the control of the computer, the sequence of movements and other commands from the start position through the or each intermediate position and back to the start position. When the arm is at rest in any given position, equal pressures exist on opposite sides of the piston or the movable member of the air motor for producing rotation about a vertical axis and equal pressures exist on opposite sides of the vane or other movable member of each of the other two motors.

The problem to be solved by the invention is the provision of a control system for example for use with a robotic arm which enables a predetermined sequence of movements to be effected under the control of a computer, which, in comparison with previously proposed systems is simple in construction and correspondingly, less costly.

The problem is solved by the provision of valve means which, in a first condition enables the motor to move the member in a first sense, in a second condition enables the motor to move the member in another sense, and in a third condition disables the motors, and computing means controlling the valve means, the system operating so that in order to position the member in a predetermined, target, position, the computing means sets the valve means selectively to the first or second conditions to enable the motor to move the member towards the target position and, in response to an indication from the position indicating means that the member has at least substantially attained the target position, the computing means sets the valve means in the said third condition.

The system in accordance with the invention enables a member such as a shaft to be positioned precisely with simple, and comparatively inexpensive means which involve on/off component operation.

The invention will now be described, by way of example, with reference to the accompanying diagrammatic drawing in which:-

Figure 1 is a schematic diagram of one embodiment of a system for moving a member; and

Figure 2 is a diagram of the construction of one of a pair of valves of the system of Figure 1.

One embodiment of a system in accordance with the invention to enable a computer to control movement of a robotic arm such as one of those described in British Patent 1,585,658 or co-pending European Application No.          entitled "A Robotic Arm", from one position to the next, target position for one of the degrees of freedom, the same principle of operation being carried out for each of the other two degrees of freedom.

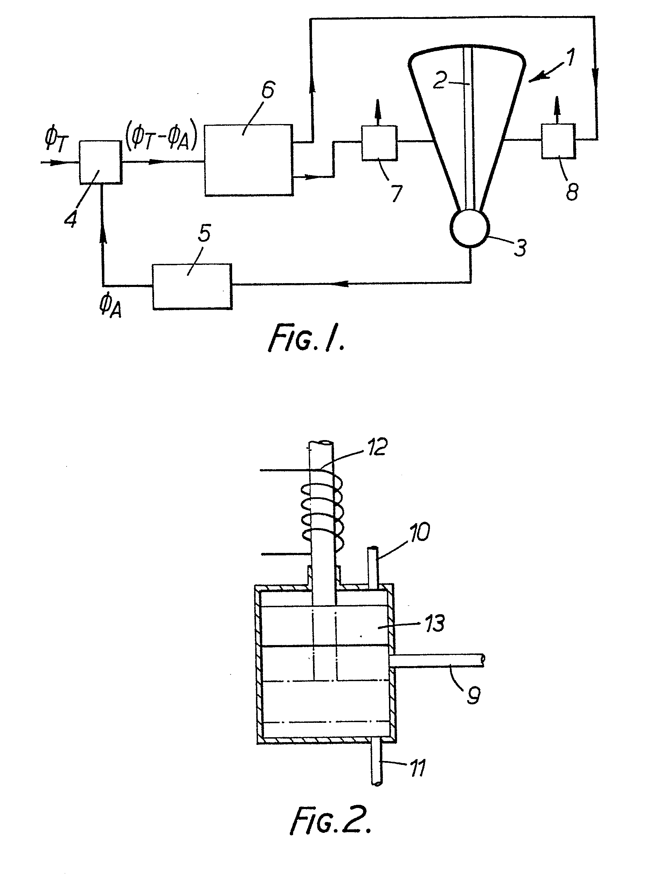

Referring to Figure 1, the arm includes an air motor 1 having a vane 2 for causing rotation of a shaft or spindle 3. The air motor 1 can be considered as one of the air motors for angularly displacing the first and second parallelogram linkages about respective horizontal axes. Assuming the arm is at rest in a given position, the computer provide, for the respective degree of freedom, an indication $\phi_T$ representative of the angular position of the arm when in the target position and comparison means 4 of the computer compares this with an indication $\phi_A$ of the actual angular position of the arm from an encoder 5 responsive to the rotation of shaft 3 and normally directly mounted thereon. The output of the comparison means 4 is an indication $(\phi_T - \phi_A)$ of the difference between the angular position of the arm when in the target position and the actual angular position of the arm for the respective degree of freedom. The indication $(\phi_T - \phi_A)$ is applied to control circuitry 6 of the computer, which circuitry computes a function C defined by:

$$C = (\phi_T - \phi_A) + \alpha \left[ \frac{d(\phi_T - \phi_A)}{dt} \right] + \beta \left[ \frac{d^2(\phi_T - \phi_A)}{dt^2} \right]$$

where $\alpha$ and $\beta$ are constants dependent on the particular system. Additional, higher derivatives may be included if required.

Control circuitry 6 generates two outputs, each indicative of the sign of C, normally of opposite sign, and one of them is used for controlling a first, solenoid-operated, three-way air valve 7 and the other is used for controlling a second, solenoid-operated, three-way air valve 8, the valves 7 and 8 being associated with respective sides of the vane or other movable member 2 of the motor 1.

To start movement of the vane 2 in the appropriate direction, the chamber on one side of the vane 2 is vented to atmosphere via the associated one of valves 7 and 8 and chamber of the other side is kept connected to the source of air pressure via the associated one of valves 7 and 8, the valves being switched to the appropriate condition in dependence upon the sign of C. Thus, the air motor 1 drives the shaft 3 via the vane 2, the direction of rotation of the vane 2 being dependent on the sign of C; the conditions of the valves 7 and 8 are reversed in response to reversal of the sign of C.

Figure 2 indicates a possible construction of one of the valves 7 and 8. An input line 9 communicates with the chamber on one side of the vane 2, an opening 10 vents to atmosphere and a line 11 is connected to an air pressure supply (not shown). A plunger 13 of the valve is controlled by a solenoid 12, itself controlled by the sign of C, so that in one position, shown in full lines, it causes the respective chamber on one side of the vane 2 to communicate with air pressure source and in the other position, indicated by broken lines, the plunger causes the respective chamber on one side of the plunger 13 to communicate with atmosphere.

When the control circuitry 6 produces an indication that ( $\phi_T$ - $\phi_A$ ) is 0, this causes the control of valves 7 and 8 in dependence upon the sign of C to be overridden and each of the valves 7 and 8 to be set to the same condition, in particular the condition in which the chambers on opposite sides of the vane 2 are each at the same pressure, being connected to the air pressure supply. Also, a brake (not shown) associated with the air motor 1 is applied.

If the arm is not precisely stopped in the target position, then an indication to this effect from the comparison means 4 results in the control circuitry 6 causing the brake to be no longer applied since ( $\phi_T$ - $\phi_A$ ) is not 0 and effecting control of valves 7 and 8 in dependence on the sign of C until ( $\phi_T$ - $\phi_A$ ) again equals 0 whereupon, as hereinbefore described, the valves 7 and 8 are set to conditions in which there are equal pressures in the chambers at opposite sides of the vane 2 for stopping the motor 1, and the brake is applied. If necessary, this correcting sequence again repeats for as many times as necessary until, iteratively, the arm is brought to rest precisely in the target position. It will be understood that the time required for such corrective sequence is very short.

As regards the brake, the system could be such that, in response to the arm reaching a position in the vicinity of the target position when ( $\phi_T$ - $\phi_A$ )

reaches a given, small value, the brake is applied. This is done to compensate for the somewhat delayed action of the brake and thereby to lock the arm precisely in the target position as quickly as possible. However, in some circumstances, the brake could be omitted from the system.

It will be appreciated that each of the valves 7 and 8 and the control of them involves a system which causes positioning using only simple "on/off" controls, each of the valves 7 and 8 only being in one condition at a time.

Although the described example is a pneumatic system, the invention is also applicable to any fluid or to an electrical system for example. In an electrical system the fluid valves will be replaced by analogous electrical amplifiers.

CLAIMS

1.    A  system for moving a member comprising a motor
(1) for moving the member (3) and position  indicating
means  (5) for generating an indication related to the
position of the member (3)

characterised by

valve  means (7,8) which,  in a  first  condition
enables  the  motor  (1) to move the member (3)  in  a
first sense,  in a second condition enables the  motor
(1) to move the member (3) in another sense,  and in a
third  condition  disables the  motor,  and  computing
means  controlling - the  valve  means,  the  system
operating  so that in order to position the member (3)
in a predetermined,  target,  position,  the computing
means  sets the valve means (7,8) selectively  to  the
first  or  second conditions to enable the  motor  (1)
to  move  the member (3) towards the  target  position
and,  in  response to an indication from the  position
indicating  means (5) that the member (3) has at least
substantially  attained  the  target  position,  the
computing means sets the valve means in the said third
condition.

2.    A system according to claim 1,  characterised by
brake  means  operative to reduce the velocity of  the
arm  as the position indicating means (5) senses  that
the arm is approaching the target.

3.    A  system  according  to claim 1  or  claim 2,

characterised in that the valve means (7,8) comprises two, three-way valves operative alternately under said first and second conditions and simultaneously under said third condition.

4. A system according to any one of claims 1 to 3, characterised in that the motor is an air motor.

5. A system according to any one of claims 1 to 4 characterised in that the valve means (7,8) are pneumatic.

8213:5PM5

Fig. 1.

Fig. 2.